# EUROPÄISCHE PATENTSCHRIFT

(11) **EP 3 326 727 B1**
(45) Veröffentlichungstag und Bekanntmachung des Hinweises auf die Patenterteilung: **08.06.2022**
(21) Anmeldenummer: 17202676.7
(22) Anmeldetag: 21.11.2017
(51) Int. Cl.: B08B 9/049, B08B 9/051, F16L 55/36, E03F 9/00, F16L 101/12, F16L 101/30

(54) **VORRICHTUNG ZUR INSPEKTION UND REINIGUNG EINES LEITUNGS- ODER ROHRABSCHNITTS**
DEVICE FOR THE INSPECTION AND CLEANING OF A CONDUIT OR PIPE SECTION
DISPOSITIF D'INSPECTION ET DE NETTOYAGE DE LA SECTION DE CONDUITE OU DE TUYAU

(30) Priorität: 29.11.2016 DE 102016123038
(43) Veröffentlichungstag der Anmeldung: 30.05.2018
(73) Patentinhaber: RITEC Rohrinspektionstechnik GmbH, 87490 Haldenwang (DE)
(72) Erfinder: Riedmiller, Max, 87459 Pfronten (DE)
(74) Vertreter: Kietzmann, Lutz

(56) Entgegenhaltungen:
- WO-A2-2011/104021
- DE-A1-102012 012 688
- JP-A- H11 114 513
- US-A1- 2003 047 276

## Beschreibung

Die Erfindung betrifft eine Vorrichtung zur Inspektion und Reinigung eines Leitungs- oder Rohrabschnitts mit den Merkmalen des Oberbegriffs des Anspruchs 1. Bei dem Leitungs- oder Rohrabschnitt handelt es sich insbesondere um einen Regen- und/oder Abwasser führenden Leitungs- oder Rohrabschnitt, d. h. einem Leitungs- oder Rohrabschnitt, welcher der Entwässerung eines Gebäudes oder eines Grundstücks dient.

### Stand der Technik

Entwässerungseinrichtungen der vorstehend genannten Art müssen in gewissen zeitlichen Abständen auf ihre Funktionsfähigkeit hin überprüft werden. Die Funktionsfähigkeit kann beispielsweise durch Ablagerungen, Risse und/oder Rohrversätze beeinträchtigt sein, so dass es zu Rückstauungen und/oder Undichtigkeiten kommt. Diese können zu erheblichen Schäden an den betreffenden Gebäuden führen.

Um die Funktionsfähigkeit eines Leitungs- oder Rohrabschnitts zu überprüfen, sind aus dem Stand der Technik Sonden bekannt, die mit einer Kamera bestückt sind und über ein Kabel und/oder einen Schlauch in einen Leitungs- oder Rohrabschnitt einführbar sind, um Bilder vom Inneren des Leitungs- bzw. Rohrabschnitts an einen außerhalb angeordneten Monitor zu übertragen.

Eine Sonde der vorstehend genannten Art geht beispielhaft aus der Offenlegungsschrift DE 10 2009 057 284 A1 hervor. Die Kamera ist an einem vorderen Ende der Sonde angeordnet und über eine Signalleitung mit einer Signalbox verbunden. Um die Sonde durch eine Leitung oder ein Rohr vorzutreiben, ist ferner eine Vortriebseinrichtung vorgesehen, die mehrere umfangseitig angeordnete Düsen umfasst, die über zugeordnete Druckmittelleitungen mit einem Druckmittel beaufschlagbar sind. Wird nur ein Teil der Düsen mit dem Druckmittel beaufschlagt und/oder der Druck variiert, kann die Vortriebsrichtung in der Weise beeinflusst werden, dass ein Navigieren der Sonde möglich ist, um beispielsweise in ein abzweigendes Rohr vorzudringen. Die Düsen der Vortriebseinrichtung dienen einerseits dem Vortrieb der Sonde, anderseits der Reinigung des Leitungs- oder Rohrabschnitts. Die Düsen sind hierzu schräg nach hinten ausgerichtet, wobei die genaue Ausrichtung der Düsen im Hinblick auf Vortrieb und/oder Reinigungseffekt optimiert werden kann.

Aus der DE 10 2012 012 688 A1 ist ferner ein Kanalspül- und Inspektionssystem mit einer Drehvorrichtung zum Drehen eines Spülkopfs bekannt. Der Spülkopf weist Düsen auf, mittels welcher ein Schub bewirkt werden kann, der den Spülkopf im Kanal an eine Wand drückt, so dass der Spülkopf, der auch für den Vortrieb zuständig ist, in einen Abzweig hineingedrückt werden kann.

Aus der JP H11 114513 A ist darüber hinaus eine Vorrichtung zum Waschen von Wandflächen einer Rohrleitung bekannt, die einen Rotationsdüsenkörper mit mehreren außenumfangsseitig angeordneten Waschdüsen umfasst. Die Waschdüsen werden über einen Hochdruckschlauchabschnitt mit Wasser versorgt, der hierzu mit einem ersten Ende des Rotationsdüsenkörpers verbunden ist. An einem dem ersten Ende abgewandten zweiten Ende des Rotationsdüsenkörpers ist ein Kabel angeordnet, das den Rotationsdüsenkörper mit einem Kamerakopf verbindet. Das Kabel ist im Bereich des Hochdruckschlauchabschnitts in dieses integriert. Ausgehend von dem vorstehend genannten Stand der Technik liegt der vorliegenden Erfindung die Aufgabe zugrunde, eine Vorrichtung zur Inspektion und Reinigung eines Leitungs- oder Rohrabschnitts bereitzustellen, die eine effiziente Reinigung ermöglicht und vielseitig einsetzbar ist.

Zur Lösung der Aufgabe wird die Vorrichtung mit den Merkmalen des Anspruchs 1 vorgeschlagen. Vorteilhafte Ausgestaltungen der Erfindung sind den Unteransprüchen zu entnehmen.

### Offenbarung der Erfindung

Die zur Inspektion und Reinigung eines Leitungs- oder Rohrabschnitts vorgeschlagene Vorrichtung umfasst eine am Ende eines Kabels angeordnete Kameraeinrichtung und eine Vortriebseinrichtung, die zur Fluidversorgung mindestens einer winklig, insbesondere rechtwinklig zu einer Hauptvortriebsrichtung ausgerichteten Düse mit einem Schlauch verbunden ist. Die Düse ist in oder an einem Ringkörper ausgebildet, der auf einem ein- oder mehrteilig ausgebildeten Grundkörper der Vortriebseinrichtung drehbar gelagert ist. Durch die drehbare Lagerung vermag der Ringkörper einschließlich der Düse zu rotieren. Die Rotation der Düse stellt eine gleichmäßige Verteilung des der Reinigung dienenden Fluids in Umfangsrichtung sicher. Auf diese Weise wird ein hoher Reinigungseffekt erreicht, da der zu reinigende Leitungs- oder Rohrabschnitt über seinen gesamten Innenumfang gespült wird. Als Reinigungs- bzw. Spülfluid kann insbesondere Wasser verwendet werden, das anschließend über die Entwässerungseinrichtung abgeführt wird.

Das Fluid, das zum Reinigen bzw. Spülen des Leitungs- oder Rohrabschnitts über die Düse abgegeben wird, ist vorzugsweise druckbeaufschlagt. Denn der Druck fördert den Austrag des Fluids über die Düse. Zugleich wird die Reinigungswirkung weiter gesteigert. Vorzugsweise wird das Fluid mit Hochdruck beaufschlagt. Der das Fluid führende Schlauch ist daher bevorzugt als Hochdruckschlauch ausgeführt.

Das Kabel, das mit der Kameraeinrichtung verbunden ist und insbesondere der Übertragung von Bilddaten dient, ist erfindungsgemäß getrennt vom Schlauch geführt. Im Falle einer Beschädigung des Kabels oder des Schlauchs können dieses bzw. dieser separat ausgetauscht werden. Dadurch sinken die Reparaturkosten.

Darüber hinaus ermöglicht die getrennte Führung des Kabels eine modulare Ausgestaltung der erfindungsgemäßen Vorrichtung. Vorzugsweise bilden die mit dem Kabel verbundene Kameraeinrichtung und die an den Schlauch angeschlossene Vortriebseinrichtung eigenständige Module aus. Dies besitzt den Vorteil, dass die Vortriebseinrichtung mit unterschiedlichen Kameraeinrichtungen kombiniert werden kann. Die Kameraeinrichtungen könnten sich beispielsweise im Hinblick auf die Ausrichtung ihrer Kamera unterscheiden und/oder dahingehend, ob die Kamera starr ausgerichtet oder schwenkbar ist. Ferner könnte die Vortriebseinrichtung mit einer Kameraeinrichtung kombiniert werden, die weitere Düsen aufweist. Analog dem eingangs genannten Stand der Technik könnten die weiteren Düsen als Reinigungs- und/oder Vortriebsdüsen ausgelegt sein, die zudem ein Navigieren der Vorrichtung durch den zu inspizierenden und/oder zu reinigenden Leitungs- oder Rohrabschnitt ermöglichen. In jedem Fall führt der vorgeschlagene modulare Aufbau zu einer Vorrichtung, die vielseitig einsetzbar ist.

Durch die separate Führung des Kabels ist zudem sichergestellt, dass das Kabel bzw. die mindestens eine hierin angeordnete Daten übertragende Leitung nicht in Kontakt mit dem Reinigungs- bzw. Spülfluid gelangt.

Um eine Beschädigung des separat geführten Kabels durch einen Fluidstrahl der mindestens einen rotierenden Düse zu verhindern, ist erfindungsgemäß das Kabel abschnittsweise im Grundkörper der Vortriebseinrichtung aufgenommen. Das Kabel kommt somit radial innen in Bezug auf die rotierende Düse und den die Düse ausbildenden bzw. aufweisenden Ringkörper zu liegen. Dadurch ist sichergestellt, dass der über die rotierende Düse abgegebene Fluidstrahl, der im Wesentlichen nach radial außen auf die Innenwandfläche des Leitungs- oder Rohrabschnitts gerichtet ist, nicht auf das Kabel trifft.

Ferner erfindungsgemäß ist das Kabel exzentrisch in Bezug auf eine die Hauptvortriebsrichtung definierende Mittellängsachse des Grundkörpers der Vortriebseinrichtung angeordnet. Durch die exzentrische Anordnung verbleibt ausreichend Raum, um einen separaten Anschluss des Schlauchs an den Grundkörper zu realisieren. Der Anschluss des Schlauchs erfolgt dabei bevorzugt konzentrisch in Bezug auf die Mittellängsachse des Grundkörpers. Dies ermöglicht eine in Bezug auf das Kabel parallele Anordnung des Schlauchs, wobei ein radialer Abstand zwischen dem Schlauch und dem Kabel eingehalten werden kann.

Bevorzugt ist der Grundkörper zumindest abschnittsweise zylinderförmig ausgebildet. Des Weiteren bevorzugt ist der Grundkörper als rotationssymmetrischer Körper ausgebildet. Die Zylinderform und/oder die Symmetrie um eine Rotationsachse trägt bzw. tragen dazu bei, dass der Grundkörper in einem Leitungs- oder Rohrabschnitt leichter vorgetrieben werden kann. Bei einem mehrteilig ausgeführten Grundkörper ist vorzugsweise ein erstes Teil des Grundkörpers zumindest abschnittsweise zylinderförmig ausgebildet. Die Zylinderform eines Abschnitts oder Teils des Grundkörpers geht vorzugsweise an zumindest einem Ende in einen Konus oder in eine sphärische Form über, um beim Vortreiben einem Verkanten innerhalb des Leitungs- oder Rohrabschnitts entgegenzuwirken.

Ferner bevorzugt weist der Grundkörper bzw. das erste Teil des Grundkörpers einen außenumfangseitigen Längsschlitz und/oder eine außenumfangseitige Längsnut zur abschnittsweisen Aufnahme des Kabels auf. Da bei einem Längsschlitz und/oder einer Längsnut das Kabel von außen in den Schlitz bzw. in die Nut eingelegt werden kann, wird auf diese Weise die Montage der Vorrichtung erleichtert. Dies erweist sich insbesondere bei einem modularen Aufbau der Vorrichtung als vorteilhaft, da dann der Austausch eines Moduls vereinfacht wird. Darüber hinaus führt die Aufnahme des Kabels in einem außenumfangseitigen Längsschlitz bzw. in einer außenumfangsseitigen Längsnut fast zwangsläufig zu einer exzentrischen Anordnung des Kabels in Bezug auf die Mittellängsachse des Grundkörpers.

Um zu verhindern, dass das Kabel aus dem Längsschlitz und/oder der Längsnut des Grundkörpers bzw. des ersten Teil des Grundkörpers herausfällt, wird vorgeschlagen, dass der Grundkörper mehrteilig ausgeführt ist und ein weiteres Teil umfasst, das ringförmig ausgebildet ist. Das ringförmige weitere Bauteil wird bevorzugt in der Weise auf das zumindest abschnittsweise zylinderförmig ausgebildete erste Teil aufgeschoben, dass es den Längsschlitz und/oder die Längsnut zumindest abschnittsweise überdeckt. Das weitere Teil kann zudem eine innenumfangseitige Längsnut zur abschnittsweisen Aufnahme des Kabels aufweisen, so dass das Kabel zwischen dem ersten und dem weiteren Teil des Grundkörpers lagefixiert ist. Die Winkellage des weiteren Teils in Bezug auf das erste Teil des Grundkörpers ist in diesem Fall vorgegeben, da die im weiteren Teil ausgebildete Längsnut in Überdeckung mit dem Längsschlitz bzw. der Längsnut des ersten Teils zu bringen ist.

Des Weiteren wird vorgeschlagen, dass der Grundkörper, vorzugsweise das erste Teil des Grundkörpers, eine Ausnehmung zur Aufnahme eines Endabschnitts des Schlauchs aufweist. Das heißt, dass vorzugsweise der Schlauch im Grundkörper endet, während das Kabel durch den Grundkörper hindurchgeführt ist. Über die im Grundkörper bzw. im ersten Teil des Grundkörpers ausgebildete Ausnehmung wird die mindestens eine Düse der Vortriebseinrichtung mit Fluid versorgt. Um eine gleichmäßige Verteilung des Fluids auf mehrere Düsen zu fördern, ist vorzugsweise die Ausnehmung zentral im Grundkörper angeordnet. Die mehreren Düsen können dabei als rotierende und/oder feststehende Düsen ausgebildet sein, je nachdem, ob sie im rotierenden Ringkörper oder im Grundkörper ausgebildet sind. In Abhängigkeit von der Anordnung und Ausgestaltung der Düsen kann das ihnen zugeführte Fluid der Reinigung des Leitungs- oder Rohrabschnitts und/oder dem Vortrieb der Vorrichtung innerhalb des Leitungs- oder Rohrabschnitts dienen.

Alternativ oder ergänzend wird vorgeschlagen, dass die im Grundkörper bzw. im ersten Teil des Grundkörpers ausgebildete Ausnehmung den Grundkörper bzw. das erste Teil des Grundkörpers in axialer Richtung durchsetzt. Das heißt, dass die Ausnehmung zur Aufnahme eines weiteren Endabschnitts eines Schlauchs geeignet ist, über den die Vortriebseinrichtung mit der Kameraeinrichtung verbindbar ist, um etwaige weitere Reinigungs- und/oder Vortriebsdüsen der Kameraeinrichtung mit Fluid zu versorgen.

Als weiterbildende Maßnahme wird vorgeschlagen, dass die Ausnehmung gestuft ausgeführt ist, so dass innerhalb der Ausnehmung mindestens ein Absatz ausgebildet wird. Der Absatz begrenzt vorzugsweise einen Abschnitt der Ausnehmung, in den ein Schlauchende eingesetzt wird. Beim Einsetzen, vorzugsweise beim Einschrauben oder Einpressen, des Schlauchendes kann der Absatz als Anschlag dienen, so dass die Einschraubtiefe bzw. Einpresstiefe über den Absatz vorgegeben ist. Ferner kann eine flächenbündige Aufnahme des Schlauchs erzielt werden, so dass der Strömungsquerschnitt des Schlauchs dem Strömungsquerschnitt des hieran angrenzenden Abschnitts der Ausnehmung entspricht.

Von der Ausnehmung, die vorzugsweise zentral im Grundkörper bzw. im ersten Teil des Grundkörpers angeordnet ist, muss das Fluid nach radial außen zu der mindestens einen rotierenden Düse geführt werden. Da die Düse rotiert, verändert sich ihre Winkellage in Bezug auf den Grundkörper. In Weiterbildung der Erfindung wird daher vorgeschlagen, dass der Grundkörper, vorzugsweise das ringförmige Teil des Grundkörpers, und der die Düse aufweisende Ringkörper einen Ringraum begrenzen, über den die Düse mit Fluid versorgbar ist. Der Ringraum stellt die Fluidversorgung der Düse unabhängig von ihrer Winkellage in Bezug auf den Grundkörper sicher, so dass die Düse stets mit ausreichend Fluid versorgt ist.

Bevorzugt wird der Ringraum durch eine im Ringkörper und/oder im Grundkörper, vorzugsweise im ringförmigen Teil des Grundkörpers, ausgebildete umlaufende Nut ausgebildet. Die Ringnut kann grundsätzlich einen beliebigen Querschnitt aufweisen, wobei eine gerundete Querschnittsform zwecks Strömungsoptimierung bevorzugt wird.

Des Weiteren bevorzugt ist der Ringraum über mindestens eine im Grundkörper ausgebildete Bohrung, insbesondere Radialbohrung, mit der vorzugsweise zentral angeordneten Ausnehmung verbunden. Die Bohrung, insbesondere Radialbohrung, ist hierzu bevorzugt in zumindest einem Teil des Grundkörpers ausgebildet. Das heißt, dass sie sich auch über mehrere Teile des Grundkörpers erstrecken kann. In diesem Fall ist die Winkellage der die Bohrung aufweisenden Teile des Grundkörpers zueinander vorgegeben. Die Ausführung der Bohrung als Radialbohrung wird bevorzugt, da sie die kürzeste Verbindung des Ringraums mit der Ausnehmung darstellt. Vorzugsweise sind mehrere Radialbohrungen in gleichem Winkelabstand zueinander im Grundkörper ausgebildet, so dass der radial außen angeordnete Ringraum gleichmäßig mit Fluid versorgt wird.

Zur Ausbildung der rotierenden Düse weist vorzugsweise der Ringkörper mindestens eine Bohrung auf, die sich von radial innen nach radial außen erstreckt. Das heißt, dass die Bohrung vorzugsweise von dem zuvor beschriebenen Ringraum abgeht, um die Düse mit Fluid zu versorgen. Gemäß einer besonders einfachen Ausführungsform bildet die Bohrung selbst die Düse aus, so dass ein Düseneinsatz entbehrlich ist. Darüber hinaus kann aber auch ein Einsatz in die Bohrung eingesetzt sein, um die rotierende Düse auszubilden. Der Einsatz kann derart ausgelegt sein, dass eine Veränderung des Düsenquerschnitts und/oder der Düsenausrichtung möglich ist. Ferner kann der Einsatz ein Ventil umfassen, das absperrbar ist, so dass über die Düse kein Fluid ausgetragen wird.

Die zur Ausbildung der rotierenden Düse vorgesehene Bohrung des Ringkörpers verläuft vorzugsweise schräg zu einer gedachten Radialen. Der über die Düse abgegebene Fluidstrahl trifft somit schräg auf die Innenwand des zu reinigenden Leitungs- oder Rohrabschnitts, wodurch der Reinigungseffekt weiter gesteigert wird. Da der Fluidstrahl zudem auf einer Achse liegt, die keinen Schnittpunkt mit der Rotationsachse des Ringkörpers gemeinsam hat, wird ein Moment erzeugt, das den Ringkörper in Rotation versetzt. Die Rotation des Ringkörpers bzw. der im oder am Ringkörper ausgebildeten Düse bedarf demnach keiner weiteren Antriebsmittel. Die Vortriebseinrichtung kann somit besonders einfach und kompaktbauend ausgeführt werden.

Ferner wird vorgeschlagen, dass der Ringkörper über ein Gleitlager auf dem Grundkörper, vorzugsweise auf dem ringförmigen Teil des Grundkörpers, drehbar gelagert ist. Die drehbare Lagerung über ein Gleitlager ist besonders einfach und kostengünstig umsetzbar, da der Ringkörper unmittelbar auf dem Grundkörper bzw. auf dem ringförmigen Teil des Grundkörpers gelagert werden kann. Zur Optimierung der Gleiteigenschaften im Gleitlager sind vorzugsweise die Materialien der Kontaktpartner aufeinander abgestimmt. Der Grundkörper ist vorteilhafterweise aus Metall hergestellt, da ein metallischer Grundkörper besonders robust ist. Idealerweise handelt es sich bei dem Metall um Edelstahl, da Edelstahl nicht rostet. Der Ringkörper ist vorzugsweise aus einem Material mit guten Gleiteigenschaften, wie beispielsweise Messing, gefertigt.

Alternativ wird vorgeschlagen, dass der Ringkörper über ein Kugellager auf dem Grundkörper, vorzugsweise auf dem ringförmigen Teil des Grundkörpers, drehbar gelagert ist. Durch den Einsatz eines Kugellagers kann der Verschleiß im Lagerbereich minimiert werden.

Ferner kann eine Antriebseinrichtung, insbesondere ein Elektromotor, vorgesehen sein, mittels welcher der Ringkörper in einer Drehbewegung antreibbar ist. Eine separate Antriebseinrichtung ist zwar nicht zwingend erforderlich, da - wie zuvor bereits erwähnt -die Rotation des Ringkörpers auch über die Düse selbst bewirkt werden kann, wenn diese schräg in Bezug auf die Innenwand des Leitungs- oder Rohrabschnitts ausgerichtet ist. Um jedoch die Drehbewegung des Ringkörpers steuern zu können, erweist sich eine separate Antriebseinrichtung als vorteilhaft.

Alternativ oder ergänzend kann eine Bremseinrichtung vorgesehen sein, mittels welcher die Drehgeschwindigkeit des Ringkörpers bei Bedarf gezielt reduziert werden kann. Die Bremseinrichtung ermöglicht auf diese Weise ebenfalls eine Steuerung der Drehbewegung des Ringkörpers. Die Bremswirkung der Bremseinrichtung kann dabei insbesondere auf Reibungskräfte, Magnetkräfte und/oder Strömungskräfte zurückzuführen sein. Beispielsweise kann der rotierende Ringkörper nach Art eines ein Propellers oder einer Turbine ausgebildet sein, um eine Verwirbelung zu erzeugen, die bremsend wirkt.

In Weiterbildung der Erfindung wird vorgeschlagen, dass der Ringkörper in einem Außenumfangsbereich mindestens ein Reinigungswerkzeug, beispielsweise in Form einer Kette, einer Bürste oder eines Schneidwerkzeugs, aufweist. Durch Vorsehen eines derartigen Reinigungswerkzeugs kann der Reinigungseffekt nochmals gesteigert werden.

Vorteilhafterweise ist die mindestens eine Düse über ein Ventil steuerbar, so dass insbesondere der Durchfluss durch die Düse veränderbar ist. Das heißt, dass der Fluidstrahl, der über die Düse austritt, derart modifiziert werden kann, dass eine für den jeweiligen Anwendungsfall optimale Reinigungswirkung erzielt wird. Ferner kann über eine Veränderung des Durchflusses die Rotationsgeschwindigkeit des Ringkörpers beeinflusst werden, wenn der über die Düse austretende Fluidstrahl zugleich dem Antrieb des drehbeweglich gelagerten Ringkörpers dient. Das Ventil sollte zudem ein Absperren der Düse ermöglichen, um den Fluidaustrag bei Bedarf unterbrechen zu können.

Das Ventil kann an beliebiger Stelle angeordnet sein, beispielsweise im Bereich der Düse oder in einer Ausnehmung bzw. Bohrung des Grundkörpers. Das Ventil kann auch stromaufwärts des Grundkörpers im Schlauch angeordnet sein. Bei mehreren Düsen kann jeder Düse ein Ventil zugeordnet sein. Alternativ können mehrere Düsen über ein Ventil gesteuert werden.

Bevorzugt ist im Grundkörper der Vortriebseinrichtung, vorzugsweise im ersten Teil des Grundkörpers, mindestens eine Schrägbohrung zur Ausbildung einer Vortriebsdüse ausgebildet. Die Schrägbohrung ist dabei schräg nach hinten in Bezug auf die Hauptvortriebsrichtung orientiert. Das hierüber ausgetragene Fluid führt beim Auftreffen auf die Innenwand des zu inspizierenden und/oder zu reinigenden Leitungs- oder Rohrabschnitts zu einem Rückstoßeffekt, der die Vortriebseinrichtung weiter vortreibt. Vorzugsweise sind mehrere solcher Schrägbohrungen bzw. Vortriebsdüsen in gleichem Winkelabstand zueinander angeordnet, um eine gleichmäßige Verteilung der Vortriebskraft zu erzielen. Des Weiteren vorzugsweise sind die Vortriebsdüsen steuerbar, um ein Navigieren der Vortriebseinrichtung zu ermöglichen. Die Steuerung der Vortriebsdüsen kann über Ventile bewirkt werden.

Zur Ausbildung einer Vortriebsdüse kann in der mindestens einen Schrägbohrung ein Düseneinsatz eingesetzt sein. Andernfalls bildet die Schrägbohrung selbst die Vortriebsdüse aus. Zur Fluidversorgung der mindestens einen Vortriebsdüse ist die Schrägbohrung bevorzugt mit der im Grundkörper bzw. im ersten Teil des Grundkörpers vorgesehenen Ausnehmung verbunden, und zwar unmittelbar oder mittelbar über eine weitere Bohrung.

Da das über eine Vortriebsdüse ausgebrachte Fluid zugleich eine Reinigung des Leitungs- oder Rohrabschnitts bewirkt, müsste die korrekte Bezeichnung eigentlich "Vortriebs- und Reinigungsdüse" lauten. Der Einfachheit halber und zur besseren Unterscheidung von weiteren Düsen, die vorrangig der Reinigung dienen, wird im Rahmen dieser Anmeldung jedoch der Begriff "Vortriebsdüse" verwendet.

Zusätzlich zu den vorstehend genannten Vortriebsdüsen können weitere Düsen vorgesehen sein, die vorrangig der Reinigung dienen. Die weiteren Düsen können gleichartig ausgebildet oder sich hinsichtlich ihrer Ausrichtung und/oder ihres Querschnitts unterscheiden.

Gemäß einer bevorzugten Ausführungsform der Erfindung bilden die Kameraeinrichtung und die Vortriebseinrichtung separate Module aus, die miteinander lösbar verbunden sind. Auf diese Weise kann ein Modul ausgetauscht und/oder mit einem anderen Modul verbunden werden, um eine optimale Anpassung der Vorrichtung an den jeweiligen Einsatzort zu erzielen. Vorzugsweise ist die lösbare Verbindung der Kameraeinrichtung und der Vortriebseinrichtung über den Schlauch und/oder das Kabel hergestellt. Eine Verbindung über den Schlauch ist insbesondere dann erforderlich, wenn die Kameraeinrichtung ebenfalls eine oder mehrere Düsen aufweist, die mit Fluid versorgt werden müssen. Bei der mindestens einen Düse der Kameraeinrichtung kann es sich sowohl um eine Vortriebsdüse, als auch um eine Reinigungsdüse handeln.

Eine Verbindung der Kameraeinrichtung und der Vortriebseinrichtung über das Kabel ist nicht zwingend erforderlich. Um das Kabel jedoch vor einer Beschädigung durch den Fluidstrahl der mindestens einen rotierenden Düse der Vortriebseinrichtung zu schützen, ist dieses bevorzugt abschnittsweise im Grundkörper der Vortriebseinrichtung aufgenommen. Um die Kameraeinrichtung über das Kabel mit der Vortriebseinrichtung zu verbinden, wird vorzugsweise erst das Kabel durch den Ringkörper der Vortriebseinrichtung und - sofern vorhanden - durch das ringförmige Teil des Grundkörpers der Vortriebseinrichtung geführt. Anschließend wird das Kabel in den außenumfangseitigen Längsschlitz und/oder in die außenumfangseitige Längsnut des Grundkörpers bzw. des ersten Teils des Grundkörpers eingelegt. Danach werden der Ringkörper und das ringförmige Teil auf das das erste Teil des Grundkörpers aufgeschoben, so dass diese den Längsschlitz bzw. die Längsnut überdecken. Das Kabel ist auf diese Weise verliersicher in der Vortriebseinrichtung gehalten. Vorzugsweise sind die Teile eines mehrteilig ausgebildeten Grundkörpers gegen Verdrehen gesichert. Die Verdrehsicherung kann insbesondere mittels eines Stifts oder einer Schraube bewirkt werden.

Eine bevorzugte Ausführungsform der Erfindung wird nachfolgend anhand der beigefügten Zeichnungen näher erläutert. Diese zeigen:
Fig. 1 eine perspektivische Ansicht einer erfindungsgemäßen Vorrichtung vor der vollständigen Montage,
Fig. 2 eine Seitenansicht der Vorrichtung der Fig. 1 nach erfolgter Montage, jedoch ohne Schlauch,
Fig. 3 einen Querschnitt durch die Vortriebseinrichtung der Vorrichtung der Fig. 1 und
Fig. 4 einen Längsschnitt durch die Vortriebseinrichtung der Vorrichtung der Fig. 1.

### Ausführliche Beschreibung der Zeichnungen

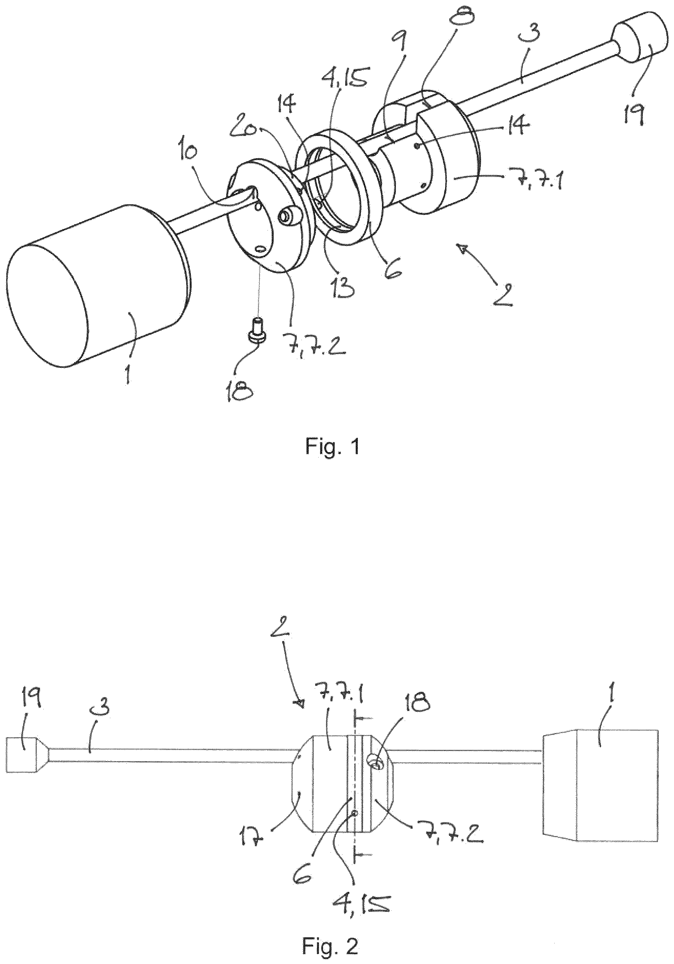

Die in der Fig. 1 dargestellte Vorrichtung umfasst eine am Ende eines Kabels 3 angeordnete Kameraeinrichtung 1, die vorliegend nur schematisch dargestellt ist, da derartige Kameraeinrichtungen grundsätzlich bekannt sind. Das Kabel 3 weist an seinem anderen Ende eine Anschluss 19 für ein Verlängerungskabel (nicht dargestellt) auf. Auf dem Kabel 3 sind in loser Anordnung mehrere Teile einer Vortriebseinrichtung 2 angeordnet. Diese umfassen einen Ringkörper 6 sowie ein erstes Teil 7.1 und ein weiteres Teil 7.2 eines mehrteilig ausgebildeten Grundkörpers 7, die zur vollständigen Montage der Vorrichtung verbunden werden müssen. Um zur Anordnung gemäß der Fig. 1 zu gelangen, wurden zunächst das ringförmige Teil 7.2 des Grundkörpers 7 und der Ringkörper 6 von der Seite des Anschlusses 19 her auf das Kabel 3 aufgeschoben. Anschließend wurde das Kabel 3 in einen außenumfangseitigen Längsschlitz 8 und in eine außenumfangseitige Längsnut 9 des ersten Teils 7.1 des Grundkörpers 7 eingelegt.

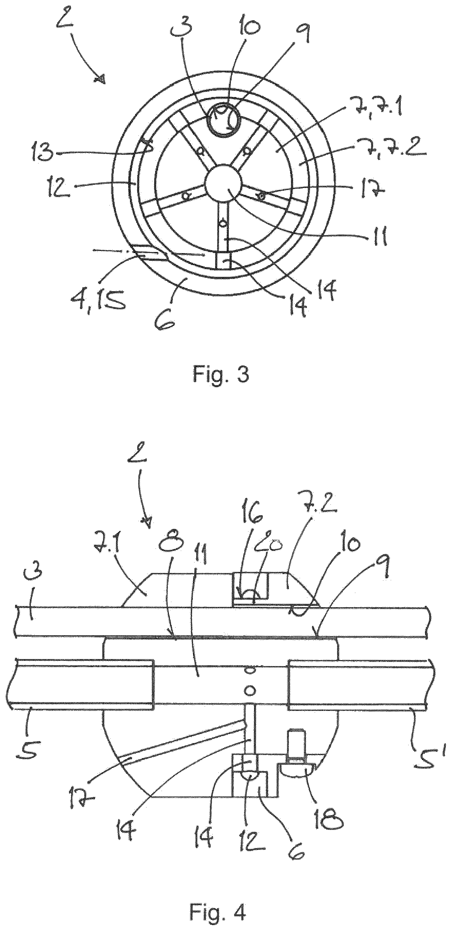

Die fertig montierte Vorrichtung ist in der Fig. 2 in einer Seitenansicht dargestellt. Zur Fertigstellung der Montage wurden der Ringkörper 6 und das ringförmige Teil 7.2 des Grundkörpers 7 auf das erste Teil 7.1 des Grundkörpers 7 geschoben, so dass zumindest die Längsnut 9 vollständig abgedeckt und das Kabel 3 im Grundkörper 7 verliersicher gehalten ist. Mittels einer Schraube 18 wurde anschließend das ringförmige Teil 7.2 des Grundkörpers 7 gegen Verdrehen gesichert (siehe auch Fig. 4).

Im Unterschied zur drehfesten Verbindung der beiden Teile 7.1 und 7.2 des Grundkörpers 7, ist der Ringkörper 6 drehbeweglich gelagert. Die drehbewegliche Lagerung erfolgt über das ringförmige Teil 7.2 des Grundkörpers 7, das zur Ausbildung eines Gleitlagers 16 einen den Ringkörper 6 aufnehmenden kragenförmigen Ansatz 20 aufweist (siehe Fig. 1 und Fig. 4). Aufgrund der drehbeweglichen Lagerung des Ringkörpers 6 vermag dieser um eine Mittelängsachse des Grundkörpers 7 zu rotieren. Im Ringkörper 6 ist eine Düse 4 für ein Reinigungsfluid ausgebildet, die bei rotierendem Ringkörper 6 ebenfalls um die Mittellängsachse rotiert. Auf diese Weise wird ein in Umfangsrichtung gleichmäßiger Austrag des Reinigungsfluid erreicht. Zur Ausbildung der Düse 4 weist der Ringkörper 6 eine Bohrung 15 auf, die schräg zu einer gedachten Radialen verläuft (siehe Fig. 3). Da die Bohrung 15 auf einer Achse liegt, welche die Mittellängsachse des Grundkörpers 7, das heißt die Drehachse des Ringkörpers 6, nicht schneidet, wird über den aus der Düse 4 austretenden Fluidstrahl ein Moment erzeugt, das den Ringkörper 6 in einer Drehbewegung antreibt.

Zur Fluidversorgung der Bohrung 15 und damit der Düse 4 ist innenumfangseitig im Ringkörper 6 eine umlaufende Nut 13 ausgebildet, so dass der Ringkörper 6 und das ringförmige Teil 7.2 des Grundkörpers 7 gemeinsam einen Ringraum 12 begrenzen, welcher der Verteilung des Fluids über den Umfang dient (siehe Fig. 3). Der Ringraum 12 ist über Bohrungen 14, die sich radial durch das ringförmige Teil 7.2 und das erste Teil 7.1 des Grundkörpers 7 erstrecken, mit einer zentralen Ausnehmung 11 des ersten Teils 7.1 des Grundkörpers 7 verbunden, der über einen Schlauch 5 mit Fluid versorgbar ist (siehe Fig. 4). Ein Endabschnitt des Schlauchs 5 ist hierzu in die zentrale Ausnehmung 11 eingesteckt, vorzugsweise eingeschraubt oder eingepresst. Um die Einschraubtiefe bzw. Einpresstiefe vorzugeben, ist die zentrale Ausnehmung 11 des Grundkörpers 7 als Stufenbohrung ausgeführt. Zur Fluidversorgung der Kameraeinrichtung 1, die ebenfalls Düsen (nicht dargestellt) aufweist, ist ein weiterer Schlauch 5' vorgesehen, die der Kameraeinrichtung 1 mit der Vortriebseinrichtung 2 verbindet (siehe Fig. 4).

Im ersten Teil 7.1 des Grundkörpers 7 sind zudem Schrägbohrungen 17 ausgebildet (siehe Fig. 3 und Fig. 4), die mittelbar über die Bohrungen 14 mit der zentralen Ausnehmung 11 verbunden sind, so dass auch diese mit Fluid versorgt werden. Die Orientierung der Schrägbohrungen 17 ist dergestalt, dass das hierüber ausgetragene Fluid einen Vortrieb erzeugt. Zugleich wird über das Fluid eine Reinigung des Leitungs- bzw. Rohrabschnitts erreicht.

Wie insbesondere der Fig. 3 zu entnehmen ist, ist das Kabel 3 exzentrisch in Bezug auf die Mittellängsachse der Vortriebseinrichtung 2 angeordnet. Dies ermöglicht eine zentrale Anordnung des Schlauchs 5 bzw. des Schlauchs 5' unter Beibehaltung eines radialen Abstands zwischen dem Kabel 3 und dem Schlauch 5 bzw. dem Schlauch 5'.

Soll die Vortriebseinrichtung 2 mit einer anderen Kameraeinrichtung 1 verbunden werden, kann durch Lösen der Schraube 18 und Abziehen des ringförmigen Teils 7.2 einschließlich des Ringkörpers 6 vom ersten Teil 7.1 des Grundkörpers 7 das Kabel 3 aus dem Längsschlitz 8 und der Längsnut 9 entnommen werden. Die Kameraeinrichtung 1 kann dann entfernt und durch die andere Kameraeinrichtung 1 ersetzt werden.

Bei der dargestellten Vorrichtung weist auch das ringförmige Teil 7.2 des Grundkörpers 7 eine Längsnut 10 auf, die jedoch im Unterschied zur Längsnut 9 des ersten Teils 7.1 des Grundkörpers 7 innenumfangseitig angeordnet ist. In Überdeckung mit der Längsnut 9 dient die Längsnut 10 der bereichsweisen Aufnahme des Kabels 3. Die Tiefe der Längsnut 9 kann somit um die Tiefe der Längsnut 10 verringert werden (siehe Fig. 3).

### Bezugszeichenliste

- 1: Kameraeinrichtung
- 2: Vortriebseinrichtung
- 3: Kabel
- 4: Düse
- 5: Schlauch
- 6: Ringkörper
- 7: Grundkörper
- 7.1: Teil des Grundkörpers
- 7.2: Teil des Grundkörpers
- 8: Längsschlitz
- 9: Längsnut
- 10: Längsnut
- 11: Ausnehmung
- 12: Ringraum
- 13: Nut
- 14: Bohrung
- 15: Bohrung
- 16: Gleitlager
- 17: Schrägbohrung
- 18: Schraube
- 19: Anschluss
- 20: Ansatz

## Patentansprüche

1. Vorrichtung zur Inspektion und Reinigung eines Leitungs- oder Rohrabschnitts, umfassend eine am Ende eines Kabels (3) angeordnete Kameraeinrichtung (1) und eine Vortriebseinrichtung (2), die zur Fluidversorgung mindestens einer winklig zu einer Hauptvortriebsrichtung ausgerichteten Düse (4) mit einem Schlauch (5) verbunden ist, wobei
die Düse (4) in oder an einem Ringkörper (6) ausgebildet ist, der auf einem ein- oder mehrteilig ausgebildeten Grundkörper (7) der Vortriebseinrichtung (3) drehbar gelagert ist,
**dadurch gekennzeichnet, dass** das mit der Kameraeinrichtung (1) verbundene Kabel (3) getrennt vom Schlauch (5) geführt ist, wobei das Kabel (3) im Grundkörper (7) abschnittsweise aufgenommen und exzentrisch in Bezug auf eine die Hauptvortriebsrichtung definierende Mittellängsachse des Grundkörpers (7) angeordnet ist.

2. Vorrichtung nach Anspruch 1,
**dadurch gekennzeichnet, dass** der Grundkörper (7), vorzugsweise ein erstes Teil (7.1) des Grundkörpers (7), zumindest abschnittsweise zylinderförmig ausgebildet ist und einen außenumfangseitigen Längsschlitz (8) und/oder eine außenumfangseitige Längsnut (9) aufweist, in dem bzw. in der das Kabel (3) abschnittsweise aufgenommen ist.

3. Vorrichtung nach einem der vorhergehenden Ansprüche,
**dadurch gekennzeichnet, dass** der Grundkörper (7) mehrteilig ausgeführt ist und ein weiteres Teil (7.2) umfasst, das ringförmig ausgebildet und vorzugsweise eine innenumfangseitige Längsnut (10) aufweist, in dem das Kabel (3) abschnittsweise aufgenommen ist.

4. Vorrichtung nach einem der vorhergehenden Ansprüche,
**dadurch gekennzeichnet, dass** der Grundkörper (7), vorzugsweise das erste Teil (7.1) des Grundkörpers (7), eine Ausnehmung (11) zur Aufnahme eines Endabschnitts des Schlauchs (5) aufweist, wobei vorzugsweise die Ausnehmung (11) zentral angeordnet ist und/oder den Grundkörper (7), vorzugsweise das erste Teil (7.1) des Grundkörpers (7), in axialer Richtung durchsetzt.

5. Vorrichtung nach einem der vorhergehenden Ansprüche,
**dadurch gekennzeichnet, dass** der Grundkörper (7), vorzugsweise das ringförmige Teil (7.2) des Grundkörpers (7), und der die Düse (4) aufweisende Ringkörper (6) einen Ringraum (12) begrenzen, über den die Düse (4) mit einem Fluid versorgbar ist.

6. Vorrichtung nach Anspruch 5,
**dadurch gekennzeichnet, dass** der Ringraum (12) durch eine im Ringkörper (6) und/oder im Grundkörper (7), vorzugsweise im ringförmigen Teil (7.2) des Grundkörpers (7), ausgebildete umlaufende Nut (13) ausgebildet wird.

7. Vorrichtung nach Anspruch 5 oder 6,
**dadurch gekennzeichnet, dass** der Ringraum (12) über mindestens eine im Grundkörper (7), vorzugsweise in zumindest einem Teil (7.1, 7.2) des Grundkörpers (7), ausgebildete Bohrung (14), insbesondere Radialbohrung, mit der Ausnehmung (11) verbunden ist.

8. Vorrichtung nach einem der vorhergehenden Ansprüche,
**dadurch gekennzeichnet, dass** der Ringkörper (6) zur Ausbildung der Düse (4) mindestens eine Bohrung (15) aufweist, die sich von radial innen nach radial außen erstreckt und vorzugsweise schräg zu einer gedachten Radialen verläuft.

9. Vorrichtung nach einem der vorhergehenden Ansprüche,
**dadurch gekennzeichnet, dass** der Ringkörper (6) über ein Gleitlager (16) oder ein Kugellager auf dem Grundkörper (7), vorzugsweise auf dem ringförmigen Teil (7.2) des Grundkörpers (7), drehbar gelagert ist.

10. Vorrichtung nach einem der vorhergehenden Ansprüche,
**dadurch gekennzeichnet, dass** eine Antriebseinrichtung, insbesondere ein Elektromotor, vorgesehen ist, mittels welcher der Ringkörper (6) in einer Drehbewegung antreibbar ist.

11. Vorrichtung nach einem der vorhergehenden Ansprüche,
**dadurch gekennzeichnet, dass** eine Bremseinrichtung vorgesehen ist, mittels welcher die Drehgeschwindigkeit des Ringkörpers (6) reduzierbar ist.

12. Vorrichtung nach einem der vorhergehenden Ansprüche,
**dadurch gekennzeichnet, dass** der Ringkörper (6) in einem Außenumfangsbereich mindestens ein Reinigungswerkzeug, beispielsweise in Form einer Kette, einer Bürste oder eines Schneidwerkzeugs, aufweist.

13. Vorrichtung nach einem der vorhergehenden Ansprüche,
**dadurch gekennzeichnet, dass** die Düse (4) über ein Ventil steuerbar ist, so dass insbesondere der Durchfluss durch die Düse (4) veränderbar ist.

14. Vorrichtung nach einem der vorhergehenden Ansprüche,
**dadurch gekennzeichnet, dass** im Grundkörper (7), vorzugsweise im ersten Teil (7.1) des Grundkörpers (7), mindestens eine Schrägbohrung (17) zur Ausbildung einer Vortriebsdüse ausgebildet ist.

15. Vorrichtung nach einem der vorhergehenden Ansprüche,
**dadurch gekennzeichnet, dass** die Kameraeinrichtung (1) und die Vortriebseinrichtung (2) separate Module ausbilden, die miteinander lösbar verbunden sind, wobei vorzugsweise die lösbare Verbindung über den Schlauch (5) und/oder das Kabel (3) hergestellt ist.

## Claims

1. A device for inspecting and cleaning a conduit or pipe section, comprising a camera apparatus (1) arranged at the end of a cable (3) and a propulsion apparatus (2) which is connected to a hose (5) for supplying fluid to at least one nozzle (4) oriented at an angle to a main propulsion direction, wherein
the nozzle (4) is formed in or on an annular body (6) which is rotatably mounted on a base body (7) of the propulsion apparatus (3) which is formed in one or more parts, **characterized in that** the cable (3) connected to the camera apparatus (1) is guided separately from the hose (5), the cable (3) being accommodated in the base body (7) in sections and being arranged eccentrically with respect to a central longitudinal axis of the base body (7) which defines the main propulsion direction.

2. The device according to claim 1,
**characterized in that** the base body (7), preferably a first part (7.1) of the base body (7), is at least in sections formed into a cylindrical form and has a longitudinal slot (8) on the outer circumference and/or a longitudinal groove (9) on the outer circumference, in which the cable (3) is accommodated in sections.

3. The device according to any one of the preceding claims,
**characterized in that** the base body (7) is made in several parts and comprises a further part (7.2) which is formed into a annular form and preferably has a longitudinal groove (10) on the inner circumference, in which the cable (3) is accommodated in sections.

4. The device according to any one of the preceding claims,
**characterized in that** the base body (7), preferably the first part (7.1) of the base body (7), has a recess (11) for receiving an end section of the hose (5), wherein the recess (11) is preferably arranged centrally and/or crosses the base body (7), preferably the first part (7.1) of the base body (7), in the axial direction.

5. The device according to any one of the preceding claims,
**characterized in that** the base body (7), preferably the annular part (7.2) of the base body (7), and the annular body (6) having the nozzle (4) delimit an annular space (12) via which the nozzle (4) can be supplied with a fluid.

6. The device according to claim 5,
**characterized in that** the annular space (12) is formed by a circumferential groove (13) formed in the annular body (6) and/or in the base body (7), preferably in the annular part (7.2) of the base body (7).

7. The device according to claim 5 or 6,
**characterized in that** the annular space (12) is connected to the recess (11) via at least one bore (14), in particular a radial bore, formed in the base body (7), preferably in at least one part (7.1, 7.2) of the base body (7).

8. The device according to any one of the preceding claims,
**characterized in that** the annular body (6) for forming the nozzle (4) has at least one bore (15) which extends from radially inward to radially outward and preferably runs obliquely to an imaginary radial.

9. The device according to any one of the preceding claims,
**characterized in that** the annular body (6) is rotatably mounted on the base body (7), preferably on the annular part (7.2) of the base body (7), via a plain bearing (16) or a ball bearing.

10. The device according to any one of the preceding claims,
**characterized in that** a drive apparatus, in particular an electric motor, is provided, by means of which the annular body (6) can be driven in a rotary movement.

11. The device according to any one of the preceding claims,
**characterized in that** a braking device is provided by means of which the rotational speed of the annular body (6) can be reduced.

12. The device according to any one of the preceding claims,
**characterized in that** the ring body (6) has at least one cleaning tool, for example in the form of a chain, a brush or a cutting tool, in an outer circumferential region.

13. The device according to any one of the preceding claims,
**characterized in that** the nozzle (4) is controllable via a valve, so that in particular the flow through the nozzle (4) is variable.

14. The device according to any one of the preceding claims,
**characterized in that** at least one inclined bore (17) is formed in the base body (7), preferably in the first part (7.1) of the base body (7), for forming a propulsion nozzle.

15. The device according to any one of the preceding claims,
**characterized in that** the camera apparatus (1) and the propulsion apparatus (2) form separate modules which are detachably connected to one another, the detachable connection preferably being established via the hose (5) and/or the cable (3).

## Revendications

1. Dispositif d'inspection et de nettoyage d'une section de conduite ou de tuyau, comprenant un dispositif de caméra (1) disposé à l'extrémité d'un câble (3) et un dispositif de propulsion (2), lequel est relié à un tuyau (5) pour l'alimentation en fluide d'au moins une buse (4) orientée angulairement par rapport à une direction d'avancement principale,
la buse (4) étant réalisée dans ou sur un corps annulaire (6), lequel est monté à rotation sur un corps de base (7) du dispositif de propulsion (3) réalisé en une ou plusieurs parties,
**caractérisé en ce que** le câble (3) relié au dispositif de caméra (1) est guidé séparément du tuyau (5), le câble (3) étant reçu par sections dans le corps de base (7) et étant disposé de manière excentrée par rapport à un axe longitudinal central du corps de base (7) définissant la direction d'avancement principale.

2. Dispositif selon la revendication 1,
**caractérisé en ce que** le corps de base (7), de préférence une première partie (7.1) du corps de base (7), est constitué selon une forme cylindrique au moins par sections et présente une fente longitudinale (8) du côté périphérique extérieur et/ou une rainure longitudinale (9) du côté périphérique extérieur, dans laquelle, respectivement dans lesquelles, le câble (3) est logé par sections.

3. Dispositif selon l'une des revendications précédentes,
**caractérisé en ce que** le corps de base (7) est réalisé en plusieurs parties et comprend une autre partie (7.2) qui est de forme annulaire et présente de préférence une rainure longitudinale (10) du côté périphérique intérieur, dans laquelle le câble (3) est reçu par sections.

4. Dispositif selon l'une des revendications précédentes,
**caractérisé en ce que** le corps de base (7), de préférence la première partie (7.1) du corps de base (7), présente un évidement (11) destiné à recevoir une section d'extrémité du tuyau (5), l'évidement (11) étant de préférence agencé au centre et/ou traversant le corps de base (7), de préférence la première partie (7.1) du corps de base (7), en direction axiale.

5. Dispositif selon l'une des revendications précédentes,
**caractérisé en ce que** le corps de base (7), de préférence la partie annulaire (7.2) du corps de base (7), et le corps annulaire (6) comportant la buse (4) délimitent un espace annulaire (12), par lequel la buse (4) est apte à être alimentée en fluide.

6. Dispositif selon la revendication 5,
**caractérisé en ce que** l'espace annulaire (12) est formé par une rainure périphérique (13) réalisée dans le corps annulaire (6) et/ou dans le corps de base (7), de préférence dans la partie annulaire (7.2) du corps de base (7).

7. Dispositif selon la revendication 5 ou 6,
**caractérisé en ce que** l'espace annulaire (12) est relié à l'évidement (11) par au moins un alésage (14), en particulier radial, formé dans le corps de base (7), de préférence dans au moins une partie (7.1, 7.2) du corps de base (7).

8. Dispositif selon l'une des revendications précédentes,
**caractérisé en ce que** le corps annulaire (6) comporte, pour former la buse (4), au moins un alésage (15), lequel s'étend radialement de l'intérieur vers l'extérieur et s'étend de préférence obliquement par rapport à une radiale imaginaire.

9. Dispositif selon l'une des revendications précédentes,
**caractérisé en ce que** le corps annulaire (6) est monté à rotation sur le corps de base (7), de préférence sur la partie annulaire (7.2) du corps de base (7), par l'intermédiaire d'un palier lisse (16) ou d'un roulement à billes.

10. Dispositif selon l'une des revendications précédentes,
**caractérisé en ce qu'**un dispositif d'entraînement est prévu, en particulier un moteur électrique, au moyen duquel le corps annulaire (6) est apte à être entraîné dans un mouvement de rotation.

11. Dispositif selon l'une des revendications précédentes,
**caractérisé en ce qu'**un dispositif de freinage est prévu, au moyen duquel la vitesse de rotation du corps annulaire (6) peut être réduite.

12. Dispositif selon l'une des revendications précédentes,
**caractérisé en ce que** le corps annulaire (6) comporte, dans une zone périphérique extérieure, au moins un outil de nettoyage, par exemple sous la forme d'une chaîne, d'une brosse ou d'un outil de coupe.

13. Dispositif selon l'une des revendications précédentes,
**caractérisé en ce que** la buse (4) est apte à être commandée par une vanne, de telle sorte qu'en particulier le débit traversant la buse (4) peut être modifié.

14. Dispositif selon l'une des revendications précédentes,
**caractérisé en ce que** dans le corps de base (7), de préférence dans la première partie (7.1) du corps de base (7), est formé au moins un alésage oblique (17) pour former une buse de propulsion.

15. Dispositif selon l'une des revendications précédentes,
**caractérisé en ce que** le dispositif de caméra (1) et le dispositif de propulsion (2) forment des modules séparés qui sont reliés l'un à l'autre de manière détachable, la liaison détachable étant de préférence réalisée par le tuyau (5) et/ou le câble (3).
